# EUROPEAN PATENT SPECIFICATION

(11) **EP 1 892 180 B1**
(45) Date of publication and mention of the grant of the patent: **20.08.2008**
(21) Application number: 07011263.6
(22) Date of filing: 08.06.2007
(51) Int. Cl.: B62D 17/00

(54) **Variable toe angle control system for a vehicle**
Variables Spurwinkelsteuerungssystem für ein Fahrzeug
Système de contrôle d'angle de pincement variable pour véhicule

(30) Priority: 25.08.2006 JP 2006228552; 29.08.2006 JP 2006231543
(43) Date of publication of application: 27.02.2008
(73) Proprietor: HONDA MOTOR CO., LTD., Tokyo 107-8556 (JP)
(72) Inventor: Horiuchi, Yutaka, Wako-shi Saitama 351-0193 (JP); Koike, Akihko, Wako-shi Saitama 351-0193 (JP); Sasaki, Hiroaki, Wako-shi Saitama 351-0193 (JP); Yanagi, Takashi, Wako-shi Saitama 351-0193 (JP)
(74) Representative: Trossin, Hans-Jürgen

(56) References cited:
- EP-A2- 0 352 759
- US-A- 4 371 191
- US-B1- 6 283 483

## Description

### TECHNICAL FIELD

The present invention relates to a variable toe angle control system for a vehicle that can individually vary the toe angles of the right and left wheels. In particular, the invention relates to a variable toe angle control system and a method for controlling toe angles according to the preamble parts of claims 1, 4, 5, 8.

### BACKGROUND OF THE INVENTION

It is known to provide a linear actuator such as a hydraulic cylinder between a vehicle body end of a lateral link or a trailing arm of a wheel suspension unit for supporting each rear wheel and the vehicle body, and to individually control the toe angles of the right and left wheels by extending or retracting the corresponding linear actuators (see Japanese patent publication No. 8-25482 and Japanese patent laid open publication No. 9-30438).

In such a system, a fail-safe mechanism is required so that the vehicle may be able to continue to travel without any inconvenience even in case of a failure of the system. For instance, the hydraulic actuator described in Japanese patent publication No. 8-25482 is provided with a piston rod that is resiliently urged by a spring member in the direction to retract the piston rod in such a manner that the toe angle is automatically restored to a zero angle when the hydraulic pressure is lost.

However, according to this prior art, when extending the piston rod under a normal condition, the hydraulic pressure is required to be high enough to oppose the spring force which is capable of maintaining the toe angle against the reaction from the road surface in case of a failure of the actuator so that the actuator and hydraulic pressure generator are required to be relatively large in size.

When the actuator is based on the use of a threaded rod, and the lead angle of the thread is selected in such a manner that the actuator remains immobile owing to the friction, because the linear displacement of the actuator is impossible without turning the threaded rod, there is some difficulty in providing a fail-safe mechanism.

A variable toe angle control system for a vehicle and a method for controlling toe angles of a vehicle according to the preamble parts of claims 1, 4, 5, and 8 are disclosed in document US 4,371,191 A. The conventional system comprises a fail-safe mechanism provided on each of the right and left wheels, wherein each fail-safe mechanism comprises a spring that biases the respective wheel towards a neutral position. In case of a failure of the control system, the actuators are deactivated and the wheels are urged into a neutral position by virtue of the biasing force of the fail-safe spring.

### BRIEF SUMMARY OF THE INVENTION

In view of such problems of the prior art, a primary object of the present invention is to provide a variable toe angle control system for a vehicle that can be incorporated with a fail-safe mechanism without complicating the structure, increasing the size of the system or requiring any additional power requirements.

A second object of the present invention is to provide a method for controlling the toe angle of a vehicle that allows a fail-safe mechanism to be incorporated in the hardware structure without complicating the structure, increasing the size of the system or requiring any additional power requirements.

According to the present invention, such objects can be accomplished by providing a variable toe angle control system for a vehicle according to claim 1 or claim 4. Such system comprises: a pair of actuators for individually varying toe angles of a right and left wheel; a pair of sensors for individually detecting the toe angles of the right and left wheels; and a control unit for determining a target value for each of the right and left wheels according to operating conditions of the vehicle and supplying a control signal to each of the actuators according to an output of the corresponding sensor and the corresponding target value; wherein the control unit is configured to detect a fault of the system and actuate at least one of the actuators to make the toe angles of the two wheels agree with each other when a fault is detected in a part of the system.

The present invention also provides a method for controlling toe angles of a vehicle in a variable toe angle control system according to claim 5 or claim 8. Such method comprises: preparing a pair of actuators for individually varying toe angles of a right and left wheel; preparing a pair of sensors for individually detecting the toe angles of the right and left wheels; determining a target value for each of the right and left wheels according to operating conditions of the vehicle; supplying a control signal to each of the actuators according to an output of the corresponding sensor and the corresponding target value; detecting a fault of the system; and actuating at least one of the actuators to make the toe angles of the two wheels agree with each other when a fault is detected in a part of the system.

Thereby, in any situation, the toe angles of the two wheels are made to agree with each other, although the toe angle control is disabled, the vehicle can continue to travel without incurring any major inconveniences. Therefore, according to the present invention, even when the variable toe angle control system becomes unable to provide a normal control function, there is no-need for a return spring device that would be otherwise required to force the wheels to neutral positions and to ensure the capability of the vehicle to travel along a straight path so that the structure can be made simple and the power source may consist of a compact structure owing to the absence of the need to have the actuator produce a force to oppose the spring force of the return spring device for forcing the wheels to the neutral positions.

When one of the wheels has become fixed in position without regard to the control signal supplied to the corresponding actuator, the actuator for the other wheel may be actuated so as to make the toe angles of the two wheels equal to each other. When at least one of the sensors is found to be faulty, both the actuators may be actuated until the actuators reach positions corresponding to stoppers that may be provided in suitable locations. When information for determining target values of the toe angles of the right and left wheels is found to be faulty, both the actuators may be actuated until the actuators reach positions corresponding to prescribed reference toe positions.

### BRIEF DESCRIPTION OF THE DRAWINGS

Now the present invention is described in the following with reference to the appended drawings, in which:
Figure 1 is a schematic view of a vehicle to which the present invention is applied;
Figure 2 is a flowchart of the control process of the system of the present invention;
Figure 3 is a diagram showing the mode of operation in the standar abnormal mode;
Figure 4 is a diagram showing the mode of operation in the sensor system abnormal mode; and
Figure 5 is a diagram showing the mode of operation in the drive system abnormal mode.

### DETAILED DESCRIPTION OF THE PREFERRED EMBODIMENTS

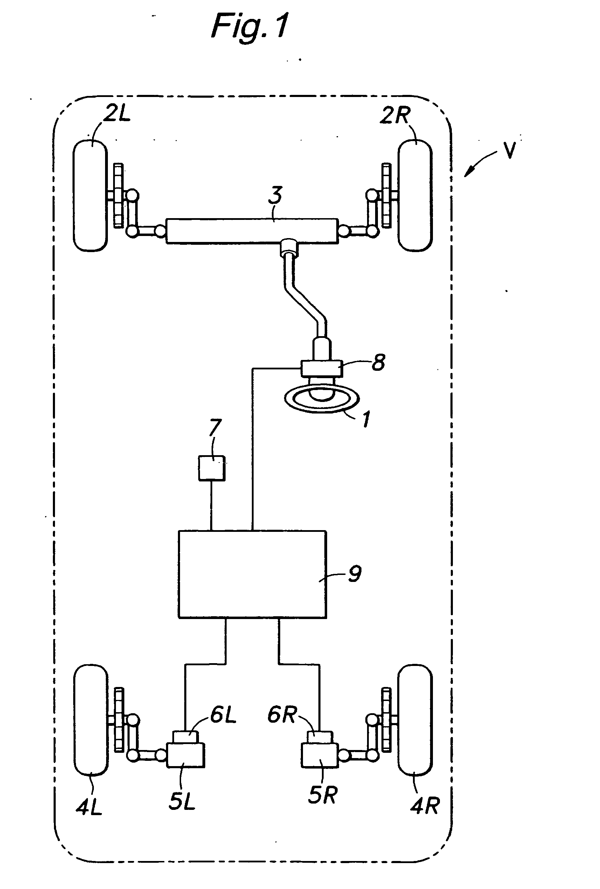

Figure 1 shows an outline of a vehicle to which the present invention is applied. The vehicle V comprises a front wheel steering device 3 for directly steering a right and left front wheel 2L and 2R according to a steering angle of a steering wheel 1, a right and left actuator 5L and 5R for individually changing the toe angles of a right and left rear wheel 4L and 4R by varying the lengths of parts, such as laterals links, of rear wheel suspension units supporting the right and left rear wheels 4L and 4R, respectively, a right and left toe angle sensor 6L and 6R for individually detecting the toe angles of the right and left rear wheels 4L and 4R, an accelerator sensor 7 for detecting a fore-and-aft acceleration acting upon the vehicle body to use it as a reference signal for determining a target control value in the variable toe angle control, a steering angle sensor 8 for detecting the steering angle of the steering wheel 1, and a control unit 9 for controlling the displacements of the actuators 5L and 5R according to the outputs of the various sensors. The fore-and-aft acceleration can also be computed from the signals of wheel speed sensors provided on the corresponding wheels 2L, 2R, 4L and 4R and pedal stroke sensors provided on an accelerator pedal and brake pedal.

Each actuator 5L, 5R may consist of a rotary motion / linear motion converter combining an electric motor fitted with a reduction gear and a thread mechanism, a cylinder device that linearly actuates a piston rod by using hydraulic pressure or any other known linear actuator. Each toe angle sensor 6L, 6R may consist of a potentiometer or any other known displacement sensor, but preferably consists of an electromagnetic sensor or other non-contact sensor for an improved durability.

According to such a variable toe angle control system, the toe-in and toe-out of the rear wheels 4L and 4R can be freely controlled under a prescribed condition by simultaneously actuating the right and left actuators 5L and 5R in a symmetric manner. If one of the right and left actuators 5L and 5R is extended while the other is retracted, the two rear wheels 4L and 4R may be steered either in the right or left direction.

The target value for each rear wheel 4L, 4R can be obtained from a map of optimum toe angle with respect to such running conditions as the front wheel steering angle and fore-and-aft acceleration. While feeding back the output (actual toe position) of each toe angle sensor 6L, 6R, an optimum torque that should be produced from the corresponding actuator 5L, 5R is computed from the deviation of the actual toe angle from a target toe angle, and an electric motor is duty controlled so as to produce the optimum torque through a current feedback. By thus forming a multiple feedback loops, a highly responsive and stable control is enabled.

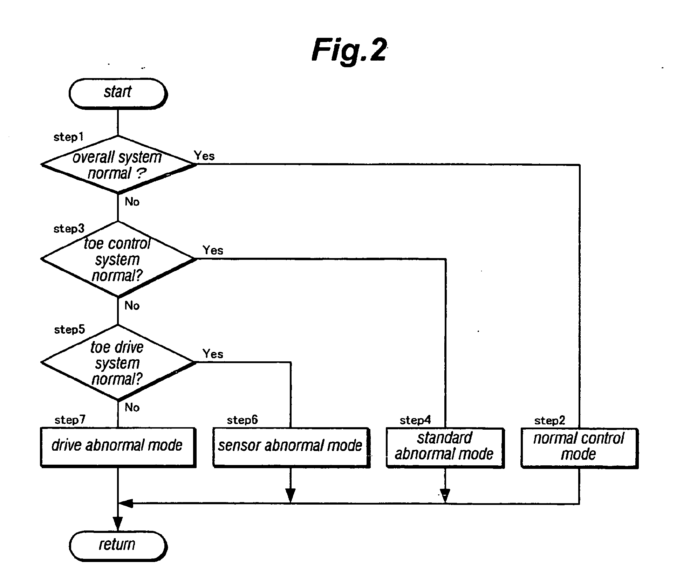

Figure 2 shows a control flow of the system of the present invention. First of all, it is determined if the overall system is operating normally (step 1). If the overall system is operating normally (Yes), a normal variable toe angle control is executed as described above (step 2). If an abnormal operation of the overall system is detected (No), it is determined if-this abnormal operation is such that the basic data, such as front wheel steering angle and acceleration, for setting a control target value for the rear wheels is not available or the intelligent part of the variable toe angle control system itself is faulty (step 3). If the fault is in the intelligent part of the system, and not in drive system or the sensing system of the variable toe angle control system (Yes), a standard abnormal mode is executed (step 4).

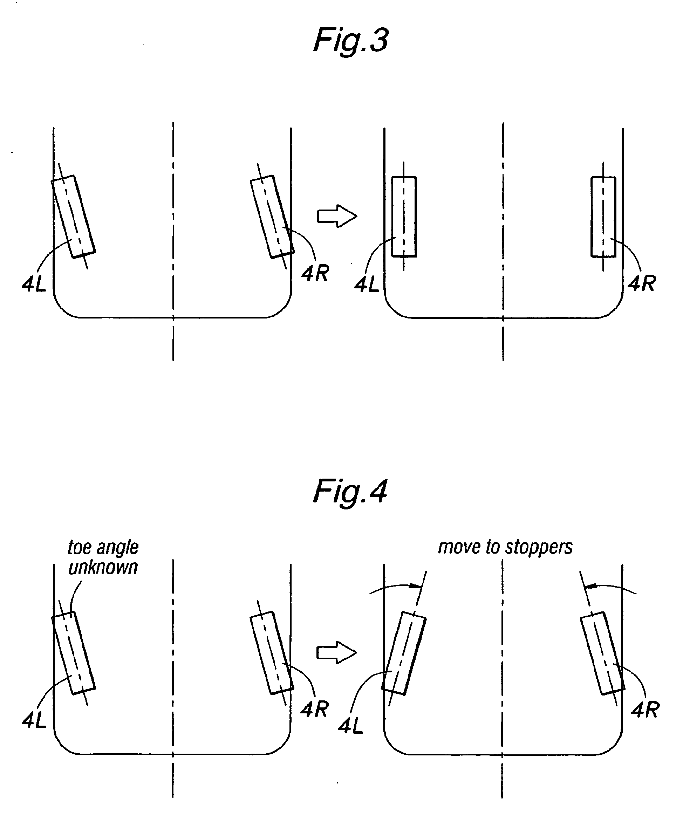

In this case, because the proper toe angle cannot be computed although the actuators 5L and 5R as well as the driver circuits thereof are in good order, the variable toe angle control is terminated, and the two actuators are actuated toward a prescribed position such as a zero toe angle position (Figure 3). The vehicle is then able to operate in a same manner as a conventional vehicle, however, without any toe angle control.

An abnormal condition other than that of the intelligent part of the variable toe angle control system can be determined as a failure to achieve a prescribed relationship between the speed difference ΔV between the two rear wheels 4L and 4R, the average speed V of the right and left wheels and the steering angle δ for more than a prescribed time period. More specifically, the speed difference ΔV between the two rear wheels 4L and 4R is substantially inversely proportional to the yaw rate γ, and a relationship γ =V/L·d (where L is the wheel base) holds between the yaw rate γ, average speed V of the right and left wheels and steering angle δ under a steady state condition. If this relationship fails to hold in a pronounced way, it can be concluded that the wheel speed sensor is faulty.

If the variable toe angle control system is found to be faulty in step 3 (No), it is determined whether the fault is in the drive system of either one of the actuators 5L and 5R or either one of the toe angle sensors 6L and 6R (step 5). If the drive systems of the actuators 5L and 5R are in good order but at least one of the toe angle sensors 6L and 6R is found to be faulty (Yes), a sensor system abnormal mode is executed (step 6). In this case, the actuators 5L and 5R can operate in a normal fashion, but the actuator corresponding to the faulty toe angle sensor is unable to determine its own position. Therefore, the two actuators are both actuated to safe positions (with some toe-in) defined by mechanical stoppers by using an open loop so that the vehicle is allowed to travel in a stable manner (Figure 4). _

Any abnormal condition in the toe angle sensors 6L and 6R can be detected when an abrupt change in the output is detected or when the output deviates from a normal range for more than a prescribed time period. Also, a redundant sensor having two outputs can be used. In this case, a fault is detected if a prescribed relationship fails to be hold between the two outputs.

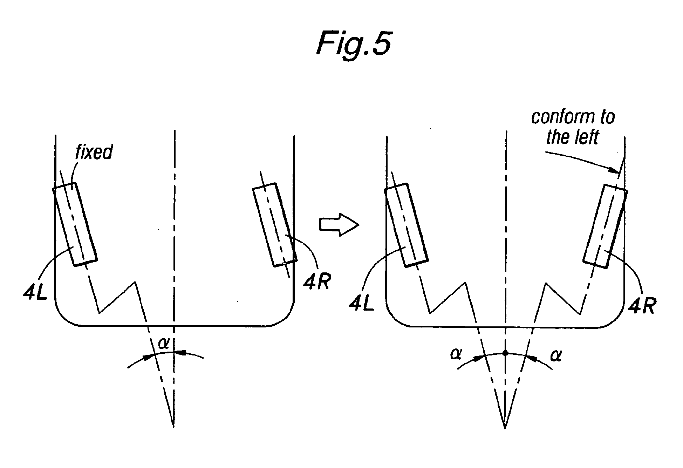

If a fault is detected in any of the drive systems such as one of the actuators (No), a drive system abnormal mode is executed (step 7). In this case, because the toe angle sensors 6L and 6R are normal and the actuators 5L and 5R are able to determine their own positions, the normal actuator is actuated to a position which is symmetric to the position of the failed actuator (Figure 5). Thereby, the two wheels balance with each other, and the vehicle is able to travel in a stable manner.

An abnormal condition of any of the drive systems can be determined from an abnormal relationship between the duty ratio (or voltage) of the electric power applied to the electric motor and the feedback current (or the motor torque) or from an abnormal supply voltage to the electric motor.

The abnormal toe angle is changed to a target position at a speed appropriate to the nature of the component that has failed or the running condition of the vehicle as quickly as possible without causing any discomfort to the vehicle operator.

Thus, the present invention allows a fail-safe system for a variable toe angle control system at a relatively low cost.

In the present invention, without regard to whether a fault is detected in any of the drive systems or in any of the sensor systems, when changing the toe angle of the normal side is changed in relation to the toe angle of the faulty side which is known, the toe angles of the right and left wheels may be controlled to asymmetric values such as to change the oversteer / understeer tendency of the vehicle, or as to enable the vehicle to travel along a straight path when the vehicle is traveling on a split-µ road surface.

Although the present invention has been described in terms of a preferred embodiment thereof, it is obvious to a person skilled in the art that various alterations and modifications are possible without departing from the scope of the present invention which is set forth in the appended claims. For instance, the foregoing embodiment was directed to an application to rear wheels of a vehicle, but may also be applied to front wheels with slight modification to the embodiment which is obvious to a person skilled in the art.

Provided is a variable toe angle control system for a vehicle that can be incorporated with a fail-safe mechanism without complicating the structure, increasing the size of the system or requiring any additional power requirements. When a fault of the system is detected, at least one of toe-angle actuators (5L, 5R) is actuated to make the toe angles of the two wheels (4L, 4R) agree with each other when a fault is detected in a part of the system. When one of the wheels has become fixed in position without regard to the control signal supplied to the corresponding actuator, the actuator for the other wheel is actuated so as to make the toe angles of the two wheels equal to each other. When at least one of toe-angle sensors (6L, 6R) is found to be faulty, the actuators both actuated until the actuators reach positions corresponding to the stoppers. When information for determining target values of the toe angles of the right and left wheels is found to be faulty, the actuators both actuated until the actuators reach positions corresponding to prescribed reference toe positions.

## Claims

1. A variable toe angle control system for a vehicle, comprising:
a pair of actuators (5L, 5R) for individually varying toe angles of a right and left wheel (4L, 4R);
a pair of sensors (6L, 6R) for individually detecting the toe angles of the right and left wheels (4L, 4R); and
a control unit (9) for determining a target toe angle value for each of the right and left wheels (4L, 4R) according to operating conditions of the vehicle and supplying a control signal to each of the actuators (5L, 5R) according to an output of the corresponding sensor and the corresponding target value;
**characterized in that** the control unit (9) is configured to detect a fault of the system, and, upon detecting that one of the wheels (4L, 4R) fails to be actuated to the target toe angle, actuate the other wheel (4R, 4L) to a same toe angle as the one wheel (4L, 4R) that has failed.

2. The variable toe angle control system according to claim 1,
**characterized in that** when one of the wheels (4L, 4R) becomes fixed in position without regard to the control signal supplied to the corresponding actuator (5L, 5R), the control unit actuates the actuator (5R, 5L) for the other wheel (4R, 4L) so as to make the toe angles of the two wheels (4L, 4R) equal to each other.

3. The variable toe angle control system according to claim 1,
**characterized by** a stopper for each of the right and left wheels (4L, 4R), wherein when at least one of the sensors (6L, 6R) is found to be faulty, the two actuators (5L, 5R) are actuated until the actuators (5L, 5R) reach positions corresponding to the stoppers.

4. The variable toe angle control system for a vehicle comprising:
a pair of actuators (5L, 5R) for individually varying toe angles of a right and left wheel (4L, 4R);
a pair of sensors (6L, 6R) for individually detecting the toe angles of the right and left wheels (4L, 4R); and
a control unit (9) for determining a target toe angle value for each of the right and left wheels (4L, 4R) according to operating conditions of the vehicle and supplying a control signal to each of the actuators (5L, 5R) according to an output of the corresponding sensor (6L, 6R) and the corresponding target value;
**characterized in that** the control unit (9) is configured to detect a fault of the system and actuate at least one of the actuators (5L, 5R) to make the toe angles of the two wheels (4L, 4R) agree with each other when a fault is detected in a part of the system; and
wherein when information for determining target values of the toe angles of the right and left wheels (4L, 4R) is found to be faulty, the two actuators (5L, 5R) are actuated until the actuators (5L, 5R) reach positions corresponding to prescribed reference toe positions.

5. A method for controlling toe angles of a vehicle in a variable toe angle control system, comprising:
preparing a pair of actuators (5L, 5R) for individually varying toe angles of a right and left wheel (4L, 4R);
preparing a pair of sensors (6L, 6R) for individually detecting the toe angles of the right and left wheels;
determining a target toe angle value for each of the right and left wheels according to operating conditions of the vehicle;
supplying a control signal to each of the actuators (5L, 5R) according to an output of the corresponding sensor (6L, 6R) and the corresponding target value;
detecting a fault of the system;
**characterized in that**, upon detecting that one of the wheels (4L, 4R) fails to be actuated to the target toe angle, actuating the other wheel (4R, 4L) to a same toe angle as the one wheel (4L, 4R) that has failed.

6. The method according to claim 5,
**characterized by,** when one of the wheels (4L, 4R) has become fixed in position without regard to the control signal supplied to the corresponding actuator (5L, 5R), actuating the actuator (5R, 5L) for the other wheel so as to make the toe angles of the two wheels (4L, 4R) equal to each other.

7. The method according to claim 5,
**characterized by** preparing a stopper for each of the right and left wheels (4L, 4R), and, when at least one of the sensors (6L, 6R) is found to be faulty, actuating both the actuators (5L, 5R) until the actuators (5L, 5R) reach positions corresponding to the stoppers.

8. The method for controlling toe angles of a vehicle in a variable toe angle control system, comprising:
preparing a pair of actuators (5L, 5R) for individually varying toe angles of a right and left wheel (4L, 4R);
preparing a pair of sensors (6L, 6R) for individually detecting the toe angles of the right and left wheels;
determining a target toe angle value for each of the right and left wheels according to operating conditions of the vehicle;
supplying a control signal to each of the actuators (5L, 5R) according to an output of the corresponding sensor (6L, 6R) and the corresponding target value;
detecting a fault of the system;
**characterized by** actuating at least one of the actuators (5L, 5R) to make the toe angles of the two wheels agree with each other when a fault is detected in a part of the system; and
when information for determining target values of the toe angles of the right and left wheels (4L, 4R) is found to be faulty, actuating both the actuators until the actuators reach positions corresponding to prescribed reference toe positions.

## Patentansprüche

1. Steuer-/Regelsystem für einen veränderbaren Spurwinkel für ein Fahrzeug, umfassend:
ein Paar von Betätigungsgliedern (5L, 5R), um einzeln die Spurwinkel eines rechten und eines linken Rads (4L, 4R) zu verändern;
ein Paar von Sensoren (6L, 6R), um einzeln die Spurwinkel des rechten und des linken Rads (4L, 4R) zu erfassen, und
eine Steuer-/Regeleinheit (9) zum Bestimmen eines Soll-Spurwinkelwerts jeweils für das rechte und das linke Rad (4L, 4R) nach Maßgabe von Betriebszuständen des Fahrzeugs und zum Zuführen eines Steuer-/Regelsignals zu jedem der Betätigungsglieder (5L, 5R) nach Maßgabe einer Ausgabe des zugehörigen Sensors und des zugehörigen Sollwerts;
**dadurch gekennzeichnet, dass** die Steuer-/Regeleinheit (9) dazu konfiguriert ist, einen Fehler des Systems zu erfassen und auf die Erfassung hin, dass eines der Räder (4L, 4R) aufgrund eines Fehlers nicht auf den Soll-Spurwinkel verstellt wird, das andere Rad (4R, 4L) auf den gleichen Spurwinkel zu verstellen, wie das fehlerhafte Rad (4L, 4R).

2. Steuer-/Regelsystem für einen veränderbaren Spurwinkel nach Anspruch 1,
**dadurch gekennzeichnet, dass** dann, wenn eines der Räder (4L, 4R) ungeachtet eines dem zugeordneten Betätigungsglied (5L, 5R) zugeführten Steuer-/Regelsignals in einer Stellung festhängt, die Steuer-/Regeleinheit das Betätigungsglied (5R, 5L) für das andere Rad (4R, 4L) derart betätigt, dass die Spurwinkel der beiden Räder (4L, 4R) aneinander angeglichen werden.

3. Steuer-/Regelsystem für einen veränderbaren Spurwinkel nach Anspruch 1,
**gekennzeichnet durch** einen Stopper jeweils für das rechte sowie für das linke Rad (4L, 4R), wobei dann, wenn wenigstens einer der Sensoren (6L, 6R) als fehlerhaft erkannt wird, die beiden Betätigungsglieder (5L, 5R) betätigt werden, bis die Betätigungsglieder (5L, 5R) Stellungen entsprechend der Stopper erreichen.

4. Steuer-/Regelsystem für einen veränderbaren Spurwinkel für ein Fahrzeug, umfassend:
ein Paar von Betätigungsgliedern (5L, 5R), um einzeln die Spurwinkel eines rechten und eines linken Rads (4L, 4R) zu verändern;
ein Paar von Sensoren (6L, 6R), um einzeln die Spurwinkel des rechten und des linken Rads (4L, 4R) zu erfassen, und
eine Steuer-/Regeleinheit (9) zum Bestimmen eines Soll-Spurwinkelwerts jeweils sowohl für das rechte als auch für das linke Rad (4L, 4R) nach Maßgabe von Betriebszuständen des Fahrzeugs und zum Zuführen eines Steuer-/Regelsignals zu jedem der Betätigungsglieder (5L, 5R) nach Maßgabe einer Ausgabe des zugeordneten Sensors (6L, 6R) und des zugeordneten Sollwerts;
**dadurch gekennzeichnet, dass** die Steuer-/Regeleinheit (9) dazu konfiguriert ist, einen Fehler des Systems zu erfassen und wenigstens einen der Betätigungsglieder (5L, 5R) so zu betätigen, dass die Spurwinkel der beiden Räder (4L, 4R) miteinander übereinstimmen, wenn ein Fehler in einem Teil des Systems erfasst wird, und
wobei dann, wenn eine Information zum Ermitteln von Sollwerten der Spurwinkel des rechten und des linken Rads (4L, 4R) als fehlerhaft erkannt wird, die beiden Betätigungsglieder (5L, 5R) betätigt werden, bis die Betätigungsglieder (5L, 5R) Stellungen erreichen, die vorbestimmten Referenzspurstellungen entsprechen.

5. Verfahren zum Steuern/Regeln von Spurwinkeln eines Fahrzeugs in einem Steuer-/Regelsystem für einen veränderbaren Spurwinkel, umfassend:
Vorbereiten eines Paars von Betätigungsgliedern (5L, 5R), um einzeln Spurwinkel eines rechten und eines linken Rads (4L, 4R) zu verändern; Vorbereiten eines Paars von Sensoren (6L, 6R), um einzeln die Spurwinkel des rechten und des linken Rads zu erfassen;
Bestimmen eines Soll-Spurwinkelwerts für jeweils das rechte sowie das linke Rad nach Maßgabe von Betriebszuständen des Fahrzeugs; Zuführen eines Steuer-/Regelsignals zu jedem der Betätigungsglieder (5L, 5R) nach Maßgabe einer Ausgabe des zugeordneten Sensors (6L, 6R) und des zugeordneten Sollwerts;
Erfassen eines Fehlers des Systems;
**dadurch gekennzeichnet, dass** auf eine Erfassung hin, dass eines der Räder (4L, 4R) fehlerhaft nicht auf den Soll-Spurwinkel verstellt wird, das andere Rad (4R, 4L) auf den gleichen Spurwinkel verstellt wird wie das fehlerhafte eine Rad (4L, 4R).

6. Verfahren nach Anspruch 5,
**dadurch gekennzeichnet, dass** dann, wenn eines der Räder (4L, 4R) ungeachtet des von dem zugeordneten Betätigungsglied (5L, 5R) zugeführten Steuer-/Regelsignals in einer Stellung festhängt, das Betätigungsglied (5R, 5L) für das andere Rad derart betätigt wird, dass die Spurwinkel der beiden Räder (4R, 4L) aneinander angeglichen werden.

7. Verfahren nach Anspruch 5,
**gekennzeichnet durch** ein Vorbereiten eines Stoppers für jeweils das rechte sowie das linke Rad (4L, 4R), sowie **dadurch**, dass dann, wenn wenigstens einer der Sensoren (6L, 6R) als fehlerhaft erkannt wird, beide Betätigungsglieder (5L, 5R) betätigt werden, bis die Betätigungsglieder (5L, 5R) Stellungen entsprechend den Stoppern erreichen.

8. Verfahren zum Steuern/Regeln von Spurwinkeln eines Fahrzeugs in einem Steuer-/Regelsystem für einen veränderbaren Spurwinkel, umfassend:
Vorbereiten eines Paars von Betätigungsgliedern (5L, 5R), um einzeln Spurwinkel eines rechten und eines linken Rads (4L, 4R) zu verändern; Vorbereiten eines Paars von Sensoren (6L, 6R), um einzeln die Spurwinkel des rechten und des linken Rads zu erfassen;
Bestimmen eines Soll-Spurwinkelwerts für jeweils das rechte sowie das linke Rad nach Maßgabe von Betriebszuständen des Fahrzeugs; Zuführen eines Steuer-/Regelsignals zu jedem der Betätigungsglieder (5L, 5R) nach Maßgabe einer Ausgabe des zugeordneten Sensors (6L, 6R) und des zugeordneten Sollwerts;
Erfassen eines Fehlers des Systems;
**gekennzeichnet durch** Betätigen wenigstens eines der Betätigungsglieder (5L, 5R) derart, dass die Spurwinkel der beiden Räder miteinander übereinstimmen, wenn ein Fehler in einem Teil des Systems erfasst wird, und
wobei dann, wenn eine Information für eine Bestimmung von Sollwerten der Spurwinkel des rechten und des linken Rads (4L, 4R) als fehlerhaft erkannt wird, beide Betätigungsglieder betätigt werden, bis die Betätigungsglieder Stellungen entsprechend den vorbestimmten Referenzspurstellungen erreichen.

## Revendications

1. Système de commande d'angle de pincement variable pour un véhicule, comprenant :
une paire d'actionneurs (5L, 5R) pour varier individuellement des angles de pincement d'une roue droite et une roue gauche (4L, 4R) ;
une paire de capteurs (6L, 6R) pour détecter individuellement les angles de pincement des roues droite et gauche (4L, 4R) ; et
une unité de commande (9) pour déterminer une valeur cible d'angle de pincement pour chacune des roues droite et gauche (4L, 4R) selon des conditions de fonctionnement du véhicule et fournir un signal de commande à chacun des actionneurs (5L, 5R) selon une sortie du capteur correspondant et la valeur cible correspondante ;
**caractérisé en ce que** l'unité de commande (9) est configurée pour détecter une panne du système, et, lors de la détection qu'une première des roues (4L, 4R) n'est pas actionnée jusqu'à l'angle de pincement cible, actionner l'autre roue (4R, 4L) jusqu'à un angle de pincement identique à la première roue (4L, 4R) qui est en panne.

2. Système de commande d'angle de pincement variable selon la revendication 1,
**caractérisé en ce que**, lorsqu'une des roues (4L, 4R) est fixée en position sans égard pour le signal de commande fourni à l'actionneur correspondant (5L, 5R) , l'unité de commande actionne l'actionneur (5R, 5L) pour l'autre roue (4R, 4L) afin de faire en sorte que les angles de pincement des deux roues (4L, 4R) soient égaux l'un à l'autre.

3. Système de commande d'angle de pincement variable selon la revendication 1,
**caractérisé par** une butée pour chacune des roues droite et gauche (4L, 4R), dans lequel lorsqu'au moins un des capteurs (6L, 6R) se révèle être en panne, les deux actionneurs (5L, 5R) sont actionnés jusqu'à ce que les actionneurs (5L, 5R) atteignent des positions correspondant aux butées.

4. Système de commande d'angle de pincement variable pour un véhicule comprenant :
une paire d'actionneurs (5L, 5R) pour varier individuellement des angles de pincement d'une roue droite et une roue gauche (4L, 4R) ;
une paire de capteurs (6L, 6R) pour détecter individuellement les angles de pincement des roues droite et gauche (4L, 4R) ; et
une unité de commande (9) pour déterminer une valeur cible d'angle de pincement pour chacune des roues droite et gauche (4L, 4R) selon des conditions de fonctionnement du véhicule et fournir un signal de commande à chacun des actionneurs (5L, 5R) selon une sortie du capteur correspondant (6L, 6R) et la valeur cible correspondante ;
**caractérisé en ce que** l'unité de commande (9) est configurée pour détecter une panne du système et actionner au moins un des actionneurs (5L, 5R) pour faire en sorte que les angles de pincement des deux roues (4L, 4R) coïncident l'un avec l'autre lorsqu'une panne est détectée dans une partie du système ; et
dans lequel, lorsque des informations pour déterminer des valeurs cibles des angles de pincement des roues droite et gauche (4L, 4R) se révèlent être erronées, les deux actionneurs (5L, 5R) sont actionnés jusqu'à ce que les actionneurs (5L, 5R) atteignent des positions correspondant à des positions prescrites de pincement de référence.

5. Procédé de commande d'angles de pincement d'un véhicule dans un système de commande d'angle de pincement variable, comprenant les étapes consistant à :
préparer une paire d'actionneurs (5L, 5R) pour varier individuellement des angles de pincement d'une roue droite et une roue gauche (4L, 4R) ;
préparer une paire de capteurs (6L, 6R) pour détecter individuellement les angles de pincement des roues droite et gauche ;
déterminer une valeur cible d'angle de pincement pour chacune des roues droite et gauche selon des conditions de fonctionnement du véhicule ;
fournir un signal de commande à chacun des actionneurs (5L, 5R) selon une sortie du capteur correspondant (6L, 6R) et la valeur cible correspondante ;
détecter une panne du système ;
**caractérisé par**, lors de la détection qu'une première des roues (4L, 4R) n'est pas actionnée jusqu'à l'angle de pincement cible, le fait d'actionner l'autre roue (4R, 4L) jusqu'à un angle de pincement identique à la première roue (4L, 4R) qui est en panne.

6. Procédé selon la revendication 5,
**caractérisé par**, lorsqu'une des roues (4L, 4R) s'est fixée en position sans égard pour le signal de commande fourni à l'actionneur correspondant (5L, 5R), le fait d'actionner l'actionneur (5R, 5L) pour l'autre roue afin de faire en sorte que les angles de pincement des deux roues (4L, 4R) soient égaux l'un à l'autre.

7. Procédé selon la revendication 5,
**caractérisé par** les étapes consistant à préparer une butée pour chacune des roues droite et gauche (4L, 4R), et, lorsqu'au moins un des capteurs (6L, 6R) se révèle être en panne, actionner les deux actionneurs (5L, 5R) jusqu'à ce que les actionneurs (5L, 5R) atteignent des positions correspondant aux butées.

8. Procédé de commande d'angles de pincement d'un véhicule dans un système de commande d'angle de pincement variable, comprenant les étapes consistant à :
préparer une paire d'actionneurs (5L, 5R) pour varier individuellement des angles de pincement d'une roue droite et une roue gauche (4L, 4R) ;
préparer une paire de capteurs (6L, 6R) pour détecter individuellement les angles de pincement des roues droite et gauche ;
déterminer une valeur cible d'angle de pincement pour chacune des roues droite et gauche selon des conditions de fonctionnement du véhicule ;
fournir un signal de commande à chacun des actionneurs (5L, 5R) selon une sortie du capteur correspondant (6L, 6R) et la valeur cible correspondante ;
détecter une panne du système ;
**caractérisé par** le fait d'actionner au moins un des actionneurs (5L, 5R) pour faire en sorte que les angles de pincement des deux roues coïncident l'un avec l'autre lorsqu'une panne est détectée dans une partie du système ; et
lorsque des informations pour déterminer des valeurs cibles des angles de pincement des roues droite et gauche (4L, 4R) se révèlent être erronées, le fait d'actionner les deux actionneurs jusqu'à ce que les actionneurs atteignent des positions correspondant à des positions prescrites de pincement de référence.
